# EUROPÄISCHE PATENTSCHRIFT

(11) **EP 1 311 750 B1**
(45) Veröffentlichungstag und Bekanntmachung des Hinweises auf die Patenterteilung: **04.01.2006**
(21) Anmeldenummer: 01957730.3
(22) Anmeldetag: 21.07.2001
(51) Int. Cl.: F02D 41/34, F02D 41/38

(54) **VERFAHREN, COMPUTERPROGRAMM UND STEUER-UND/ODER REGELEINRICHTUNG ZUM BETREIBEN EINER BRENNKRAFTMASCHINE**
METHOD, COMPUTER PROGRAMME AND CONTROL AND/OR REGULATION DEVICE FOR OPERATING AN INTERNAL COMBUSTION ENGINE
PROCEDE, PROGRAMME INFORMATIQUE ET DISPOSITIF DE COMMANDE ET/OU REGLAGE POUR LE FONCTIONNEMENT D'UN MOTEUR A COMBUSTION INTERNE

(30) Priorität: 14.08.2000 DE 10040251
(43) Veröffentlichungstag der Anmeldung: 21.05.2003
(73) Patentinhaber: ROBERT BOSCH GMBH, 70422 Stuttgart (DE)
(72) Erfinder: JOOS, Klaus, 74399 Walheim (DE); WOLBER, Jens, 70839 Gerlingen (DE); FRENZ, Thomas, 86720 Noerdlingen (DE); AMLER, Markus, 71229 Leonberg (DE); BOCHUM, Hansjoerg, Novi, MI 48377 (US)
(86) Internationale Anmeldenummer: PCT/DE2001/002784
(87) Internationale Veröffentlichungsnummer: WO 2002/014669

(56) Entgegenhaltungen:
- DE-A- 10 046 597
- DE-A- 19 612 150
- DE-A- 19 851 457
- DE-A- 19 852 218
- US-A- 5 035 223
- US-A- 5 222 481
- PATENT ABSTRACTS OF JAPAN vol. 007, no. 012 (M-186), 19. Januar 1983 (1983-01-19) & JP 57 171042 A (HITACHI KENKI KK), 21. Oktober 1982 (1982-10-21)

## Beschreibung

### Stand der Technik

Die vorliegende Erfindung betrifft ein Verfahren zum Betreiben einer Brennkraftmaschine insbesondere eines Kraftfahrzeugs, bei dem der Kraftstoff unter. Druck über ein Einspritzventil zugeführt und die eingespritzte Kraftstoffmenge durch die Einspritzzeit beeinflusst wird.

Ein solches Verfahren ist vom Markt her bekannt. Es wird bei solchen Brennkraftmaschinen eingesetzt, welche eine Drosselklappe aufweisen, die nicht mechanisch mit dem Gaspedal z.B. eines Kraftfahrzeugs verbunden ist. Es arbeitet nach dem Prinzip der Benzin-Direkteinspritzung (BDE), bei dem der Kraftstoff mit hohem Druck direkt in einen Brennraum der Brennkraftmaschine eingespritzt wird. Die Einspritzung erfolgt dabei über ein Einspritzventil, welches von einem Steuer- und/oder Regelgerät so angesteuert wird, dass es eine bestimmte Zeit geöffnet ist. Die in den Brennraum eingespritzte Kraftstoffmenge wird bei dem bekannten Verfahren also durch die Einspritzzeit festgelegt bzw. beeinflusst.

Grundlage der Benzin-Direkteinspritzung ist ein Kraftstoffsystem, welches den Kraftstoff unter hohem Druck zu den Einspritzventilen führt. Kommt es aufgrund eines Fehlers im Kraftstoffsystem zu einer Abweichung des tatsächlichen Kraftstoffdrucks von einem Solldruckbereich, kann dies dazu führen, dass trotz an sich richtiger Öffnungsdauer des Einspritzventils die eingespritzte Kraftstoffmenge nicht der an sich geforderten Kraftstoffmenge entspricht.

Aus diesem Grund wird bei dem bekannten Verfahren die Einspritzdauer abhängig vom Kraftstoffdruck korrigiert. Die korrigierte Einspritzdauer kann jedoch länger als das maximal zur Einspritzung zur Verfügung stehende Zeitfenster werden. In diesem Fall erfolgt ein Abbruch der Einspritzung. Dies führt zu einem Luft-Kraftstoffgemisch im Brennraum, welches nicht dem geforderten Luft-Kraftstoffgemisch entspricht. Ein solches Luft-Kraftstoffgemisch kann z.B. stark abgemagert sein, was zu einem Einbruch des Drehmoments bis hin zu Aussetzern der Brennkraftmaschine führen kann. Darüber hinaus leidet das Emissionsverhalten der auf diese Weise betriebenen Brennkraftmaschine.

Die genannten Probleme treten vor allem bei hohen Drehzahlen und einer entsprechend hohen geforderten einzuspritzenden Kraftstoffmenge auf. Bei dem bekannten Verfahren ist daher vorgesehen, dass bei einer Abweichung des Kraftstoffdrucks von einem Solldruckbereich die maximal mögliche Drehzahl der Brennkraftmaschine begrenzt wird. Dies führt jedoch zu einem erheblichen Komfortverlust beim Betrieb der Brennkraftmaschine, insbesondere im Zusammenhang mit dem Betrieb der Brennkraftmaschine in einem Kraftfahrzeug, da ein großer Betriebsbereich der Brennkraftmaschine nicht mehr zur Verfügung steht. Außerdem kann es vorkommen, dass eine zum Schutz z.B. einer Abgasturbine oder eines Katalysators erforderliche Temperaturabsenkung durch eine entsprechende Anfettung des Gemisches nicht mehr möglich ist.

Die vorliegende Erfindung hat daher die Aufgabe, ein Verfahren der eingangs genannten Art so weiterzubilden, dass die Brennkraftmaschine auch bei einem Fehler im Kraftstoffsystem mit relativ hohem Komfort betrieben werden kann und eine möglichst lange Lebensdauer'der Brennkraftmaschine und ihrer Komponenten gewährleistet ist.

Aus der DE-A-19 851 457 ist bekannt ein maximal zulassiges Motormoment als Funktion von Betriebsparametern festzulesen.

Diese Aufgabe wird dadurch gelöst, dass bei dem eingangs genannten Verfahren, bzw. beim Gegenstand der anabhängigen Ansprüche 9 und 11, ein maximal zulässiges und vom tatsächlichen Kraftstoffdruck abhängiges Drehmoment der Brennkraftmaschine bestimmt wird.

### Vorteile der Erfindung

Erfindungsgemäß wurde erkannt, dass auch bei einem Fehler im Kraftstoffsystem der Brennkraftmaschine diese durchaus mit hohen Drehzahlen betrieben werden kann, ohne dass Schäden an der Brennkraftmaschine zu befürchten sind. Ursächlich für mögliche Schäden an der Brennkraftmaschine bei einem Fehler im Kraftstoffsystem sind nämlich nicht die hohen Drehzahlen, sondern das aufgrund der fehlerhaften eingespritzten Kraftstoffmenge fehlerhafte Luft-Kraftstoffgemisch im Brennraum. Dessen Auswirkungen sind bei hohem tatsächlichem Drehmoment der Brennkraftmaschine besonders deutlich.

Durch eine Begrenzung des maximalen Drehmoments der Brennkraftmaschine wird es,ermöglicht, den gesamten Drehzahlbereich der Brennkraftmaschine zu nutzen. So kann erfindungsgemäß die Brennkraftmaschine auch bei sehr hohen Drehzahlen betrieben werden, solange in diesem Drehzahlbereich nur eine geringe Kraftstoffmenge eingespritzt werden muss. Dies ist dann der Fall, wenn ein relativ gesehen geringes Drehmoment von der Brennkraftmaschine bereit gestellt werden muss.

Im Falle eines Kraftfahrzeugs liegen solche Situationen z.B. bei einer Bergabfahrt, insbesondere beim Betrieb des Kraftfahrzeugs mit einem Anhänger, vor.

Vorteilhafte Weiterbildungen der Erfindung sind in Unteransprüchen angegeben.

In einer ersten Weiterbildung ist angegeben, dass das maximal zulässige Drehmoment aus einer Begrenzung einer maximalen Luftfüllung eines Brennraums gewonnen wird. Bei der Luftfüllung des Brennraumes handelt es sich um einen Wert, welcher bei üblichen Brennkraftmaschinen einfach einzustellen ist. Bei Brennkraftmaschinen, bei denen die Drosselklappe nicht mechanisch mit einem Gaspedal verbunden ist (sog. EGAS), kann die Luftfüllung einfach durch eine entsprechende Ansteuerung der Drosselklappe eingestellt werden. Bei Brennkraftmaschinen mit Vorverdichtung (Turbolader) kann üblicherweise ein Umluftventil angesteuert werden, mit dem der Ladedruck, also letztendlich die Luftfüllung des Brennraums, eingestellt werden kann.

Ziel des Verfahrens ist es, auch bei einem Fehler im Kraftstoffsystem ein bestimmtes Kraftstoff-Luftgemisch im Brennrum einzustellen. Dies wird beispielsweise dadurch ermöglicht, dass die maximale Luftfüllung, aus der das maximal zulässige Drehmoment gewonnen wird, auf der Basis der maximal einspritzbaren Kraftstoffmenge bestimmt wird.

Diese wird wiederum vorzugsweise aus der aktuellen Drehzahl, der maximal möglichen Einspritzzeit und dem zur Verfügung stehenden Kraftstoffdruck bestimmt. Eine derartige Bestimmung der maximal einspritzbaren Kraftstoffmenge bietet sich insbesondere dann an, wenn der Fehler im Kraftstoffsystem in einem zu geringen Druck besteht. Ein solcher kann z.B. bei einer fehlerhaften Kraftstoffpumpe vorkommen.

Durch einen Druck des Kraftstoffsystems, welcher unterhalb eines Solldruckbereichs liegt, sinkt die maximal einspritzbare Kraftstoffmenge, da während der Öffnungsdauer des Einspritzventils, also der Einspritzzeit, nur eine geringere Kraftstoffmenge aus dem Einspritzventil austritt. Die bei einer bestimmten Drehzahl maximal mögliche Einspritzzeit ergibt sich wiederum aus der maximal möglichen Drehzahl der Brennkraftmaschine und der bei dieser Drehzahl ventil- und/oder brennkraftmaschinenspezifischen maximal möglichen Einspritzzeit (diese hängt wiederum im allgemeinen vom frühestmöglichen Einspritzbeginn und dem Zündzeitpunkt ab).

Ein Fehler im Kraftstoffsystem kann jedoch auch in einem zu hohen Kraftstoffdruck bestehen. Ein solcher tritt z.B. dann auf, wenn ein im Kraftstoffsystem vorhandenes Drucksteuerventil defekt ist. Um bei einem zu hohen Kraftstoffdruck ein sicheres Öffnen der Einspritzventile zu erlauben, muss der Haltestrom der Einspritzventile erhöht werden. Ein erhöhter Haltestrom kann jedoch zu einem erheblichen Anstieg der Verlustleistung in einem Steuergerät der Einspritzventile führen, was wiederum eine thermische Belastung dieses Steuergeräts zur Folge hat. Dem wird bei einer Weiterbildung des erfindungsgemäßen Verfahrens dadurch begegnet, dass die maximal einspritzbare Kraftstoffmenge aus der aktuellen Drehzahl, einem Haltestrom des Einspritzventils und dem Kraftstoffdruck bestimmt wird.

Da durch die Begrenzung des maximalen Drehmoments der Brennkraftmaschine die Betriebscharakteristiken der Brennkraftmaschine möglicherweise erheblich beeinflusst werden, wird in Weiterbildung des erfindungsgemäßen Verfahrens vorgeschlagen, dass bei einer erkannten Abweichung eine Fehlermeldung erfolgt. Im Falle eines Kraftfahrzeugs wird durch eine solche Fehlermeldung der Fahrer darüber informiert, dass ihm nicht das'normale Drehmoment der Brennkraftmaschine zur Verfügung steht. Somit kann er seine Fahrweise der veränderten Charakteristik der Brennkraftmaschine anpassen.

Die Erfindung betrifft auch ein Computerprogramm, welches zur Durchführung des obigen Verfahrens geeignet ist, wenn es auf einem Computer ausgeführt wird. Besonders bevorzugt ist dabei, wenn das Computerprogramm auf einem Speicher, insbesondere auf einem Flash-Memory, abgespeichert ist.

Die Erfindung betrifft schließlich noch eine Steuer- und/oder Regeleinrichtung zum Betreiben einer Brennkraftmaschine, insbesondere eines Kraftfahrzeugs, bei der der Kraftstoff unter Druck über mindestens ein Einspritzventil zugeführt und die eingespritzte Kraftstoffmenge durch die Einspritzzeit beeinflusst wird.

Um im Falle einer Abweichung des Kraftstoffdrucks von einem Solldruckbereich dem Benutzer den maximalen Komfort beim Betrieb der Brennkraftmaschine zur Verfügung stellen zu können, wird erfindungsgemäß vorgeschlagen, dass die Steuer- und/oder Regeleinrichtung ein maximal zulässiges und vom tatsächlichen Kraftstoffdruck abhängiges Drehmoment der Brennkraftmaschine bestimmt. Im Hinblick auf die Vorteile der erfindungsgemäßen Steuer- und/oder Regeleinrichtung wird auf die obigen Ausführungen verwiesen.

### Zeichnung

Nachfolgend werden Ausführungsbeispiele der Erfindung unter Bezugnahme auf die beiliegende Zeichnung im Detail erläutert. In der Zeichnung zeigen:
- Fig. 1:: ein Blockschaltbild einer Brennkraftmaschine;
- Fig. 2:: ein Flussdiagramm eines ersten Ausführungsbeispiels eines Verfahrens zum Betreiben der Brennkraftmaschine von Fig. 1;
- Fig. 3:: ein Flussdiagramm eines zweiten Ausführungsbeispiels eines Verfahrens zum Betreiben der Brennkraftmaschine von Fig. 1; und
- Fig. 4:: ein Flussdiagramm eines dritten Ausführungsbeispiels eines Verfahrens zum Betreiben der Brennkraftmaschine von Fig. 1;

### Beschreibung der Ausführungsbeispiele

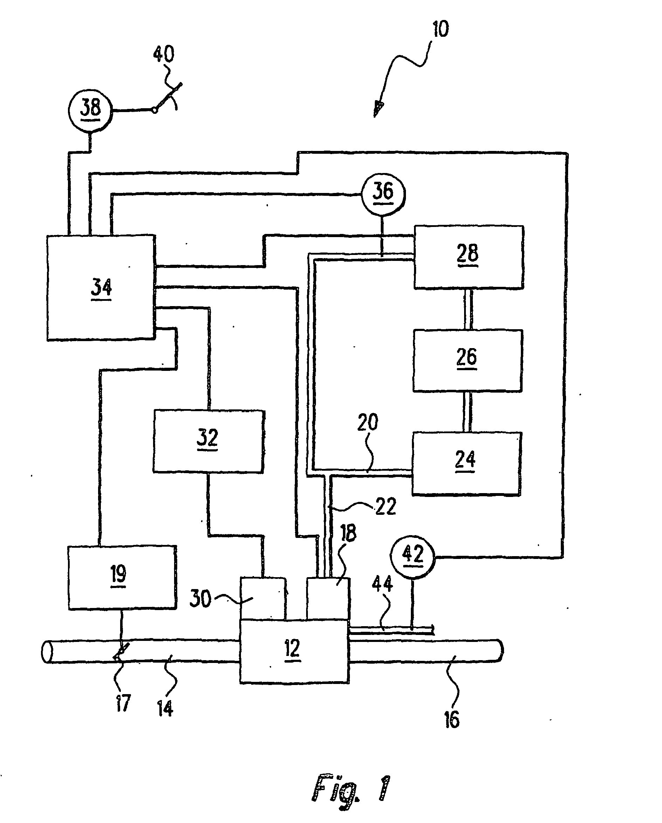

In Fig. 1 trägt eine Brennkraftmaschine insgesamt das Bezugszeichen 10. Sie umfasst einen Brennraum 12, dem Verbrennungsluft über ein Ansaugrohr 14 zugeführt wird. Abgase werden über ein Abgasrohr 16 aus dem Brennraum 12 abgeleitet. Im Ansaugrohr ist eine Drosselklappe 17 vorgesehen, deren Winkelstellung relativ zum Ansaugrohr 14 von einem Stellmotor 19 eingestellt wird.

Kraftstoff gelangt in den Brennraum 12 über ein Hochdruck-Einspritzventil 18, welches den Kraftstoff direkt in den Brennraum 12 einspritzt. Obwohl bei dem vorliegenden Ausführungsbeispiel nur ein Hochdruck-Einspritzventil 18 gezeigt ist, versteht es sich, dass auch mehrere Ventile vorgesehen sein können.

Das Hochdruck-Einspritzventil 18 wird von einer Kraftstoff-Sammelleitung 20 gespeist, mit der es über eine Stichleitung 22 verbunden ist. Die Kraftstoff-Sammelleitung 20 wird üblicherweise als "Rail" bezeichnet. Der Kraftstoff in der Kraftstoff-Sammelleitung 20 steht üblicherweise unter sehr hohem Druck, welcher von einer Hochdruck-Kraftstoffpumpe 24 aufgebracht wird. Diese ist eingangsseitig wiederum mit einem Kraftstofftank 26 verbunden.'Zur Einstellung des Drucks in der Kraftstoff-Sammelleitung 20 ist ein Drucksteuerventil 28 vorgesehen, welches zwischen der Kraftstoff-Sammelleitung 20 und dem Kraftstofftank 26 zwischengeschaltet ist.

Gezündet wird das sich im Brennraum 12 einstellende Kraftstoff-Luftgemisch von einer Zündkerze 30, die von einem Zündsystem 32 gespeist wird.

Die Brennkraftmaschine 10 umfasst ferner ein Steuer- und Regelgerät 34, welches eingangsseitig zunächst mit einem Drucksensor 36 verbunden ist, der den Druck in der Kraftstoff-Sammelleitung 20 erfasst. Das Drucksteuerventil 28, der Drucksensor 36 und das Steuer- und Regelgerät 34 bilden also einen geschlossenen Regelkreis für den Druck in der Kraftstoff-Sammelleitung 20. Das Steuer- und Regelgerät 34 erhält ferner Signale von einem Stellungsgeber 38, welcher die Winkelstellung eines Gaspedals 40 abgreift. Schließlich ist das Steuer- und Regelgerät 34 noch mit einem Drehzahlgeber 42 verbunden, welcher die Drehzahl einer Kurbelwelle 44 erfasst.

Ausgangsseitig werden von dem Steuer- und Regelgerät 34 der Stellmotor 19 der Drosselklappe 17, die Zündanlage 32, das Hochdruck-Einspritzventil 18 und das Drucksteuerventil 28 angesteuert.

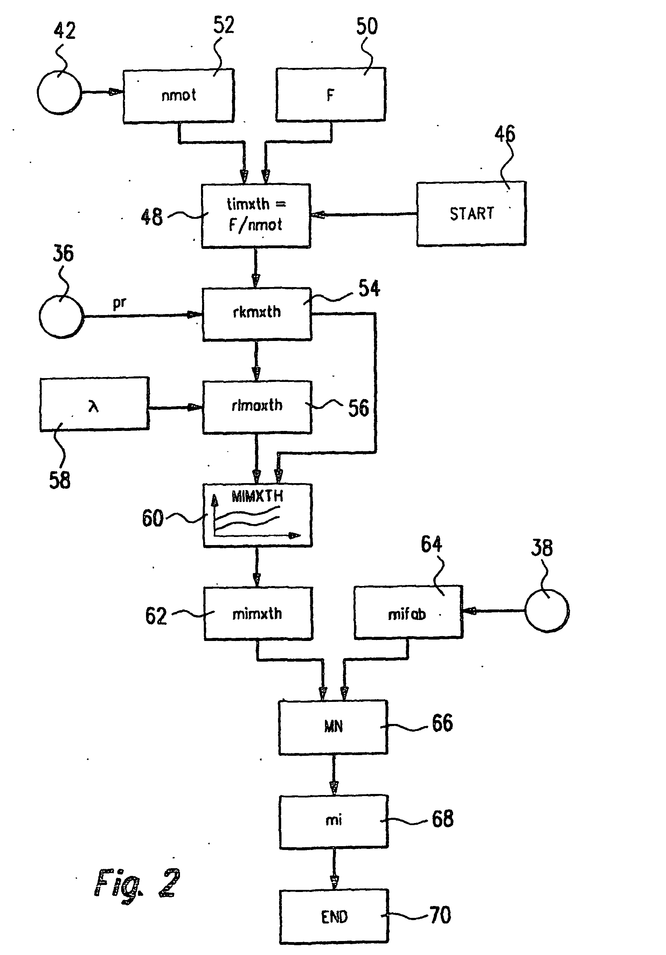

Im Normalbetrieb wird eine Leistungsanforderung, welche der vom Stellungsgeber 38 übertragenen Winkelstellung des Gaspedals 40 entspricht, von dem Steuer- und Regelgerät 34 in entsprechende Steuersignale für den Stellmotor.19 der Drosselklappe 17 und für das Hochdruck-Einspritzventil 18 umgesetzt. Im Falle eines aufgrund einer defekten Hochdruck-Kraftstoffpumpe 24 zu niedrigen Drucks in der Kraftstoff-Sammelleitung 20 wird die Einspritzdauer des Hochdruck-Einspritzventils korrigiert (d.h. erhöht). Da die maximale Einspritzdauer aber einerseits durch den Beginn des Ansaugtaktes und andererseits durch den Zündzeitpunkt begrenzt ist, kann es Situationen geben, in denen weniger Kraftstoff über das Hochdruck-Einspritzventil 18 in den Brennraum 12 der Brennkraftmaschine 10 gelangt. In diesem Fall wird nach einem Verfahren vorgegangen, welches als Computerprogramm auf einem nicht dargestellten Speicher des Steuer- und Regelgeräts 34 gespeichert ist. Das Verfahren läuft wie folgt ab (vgl. Fig. 2):
Nach einem Startblock 46 wird in einem Block 48 eine maximal mögliche Einspritzzeit timxth des Hochdruck-Einspritzventils 18 bestimmt. Die bei einer bestimmten Drehzahl maximal mögliche Einspritzzeit timxth ergibt sich aus der Division eines. Faktors F (Block 50) durch die vom Drehzahlgeber 42 übermittelte Drehzahl nmot (Block 52) der Kurbelwelle 44. Der Faktor F wiederum bestimmt sich aus der maximal möglichen Drehzahl der Brennkraftmaschine 10 multipliziert mit der bei dieser maximalen Drehzahl längstmöglichen Einspritzzeit des Hochdruck-Einspritzventils 18.

Für eine übliche Brennkraftmaschine 10 beträgt die maximal mögliche Drehzahl beispielsweise ungefähr 6000 Umdrehungen/min. Die längsmögliche Einspritzzeit bei Maximaldrehzahl wiederum entspricht bestenfalls der Länge des entsprechenden Ansaugtaktes plus eines bestimmten Teils des Verdichtungstaktes, bei einer Drehzahl von 6000 Umdrehungen/min sind dies etwas mehr als 5 Millisekunden.

In einem Block 54 wird aus der bei der aktuellen Drehzahl nmot maximal möglichen Einspritzzeit timxth unter Berücksichtigung des aktuellen Drucks pr in der Kraftstoff-Sammelleitung 20, welcher vom Drucksensor 36 bereitgestellt wird, die maximal einspritzbare Kraftstoffmenge rkmxth betimmt. Aus dieser wiederum wird im.Block 56 unter Berücksichtigung einer gewünschten Zusammensetzung des Luft-Kraftstoffgemisches im Brennraum 12 die entsprechende maximale Luftfüllung rlmaxth bestimmt. Die gewünschte Zusammensetzung des Kraftstoff-Luftgemisches im Brennraum 12 wird üblicherweise durch den Lambda-Wert dargestellt (Block 58).

Die maximal einspritzbare Kraftstoffmenge rkmxth und die entsprechende Luftfüllung rlmaxth werden nun in ein Kennfeld MIMXTH eingespeist (Block 60), dessen Ausgangsgröße ein im Hinblick auf die gewünschte Gemischzusammensetzung und die maximal einspritzbare Kraftstoffmenge maximal zulässiges Drehmoment mimxth der Brennkraftmaschine 10 ist (Block 62). Im übrigen sei darauf hingewiesen, dass bei deutlich geringerem Kraftstoffdruck als dem Soll-Kraftstoffdruck eine weitere Momentenreduzierung notwendig sein kann, da die Gemischbildung nicht richtig funktioniert. Dies kann durch einen drehzahlabhängigen Faktor (hier nicht dargestellt) berücksichtigt werden kann.

Das maximal zulässige Drehmoment mimxth der Brennkraftmaschine 10 wird mit einem sogenannten Fahrerwunschmoment mifab verglichen, welches im Block 64 aus dem Signal des Stellungsgebers 38 des Gaspedals 40 gewonnen wird. Im Block 66 erfolgt eine Minimalwertbildung, welche als Ausgangsgröße im Block 68 das Soll-Drehmoment mi der Brennkraftmaschine 10 ergibt. Das Verfahren endet im Block 70.

Liegt das auf dem Druck pr in der Kraftstoff-Sammelleitung 20 basierte maximal zulässige Drehmoment mimxth unterhalb des Fahrerwunschmoments mifab, wird das Drehmoment mimxth als Soll-Drehmoment ausgegeben. Anderfalls wird das FahrerWunschmoment mifab als Soll-Drehmoment verwendet. Auf diese Weise wird sichergestellt, dass auch bei einem Druck pr in der Kraftstoff-Sammelleitung 20, welcher unterhalb eines Soll-Druckbereiches liegt, dennoch die gewünschte Zusammensetzung des Luft-Kraftstoffgemisches im Brennraum 12 eingetellt werden kann. Dabei sind auch hohe Drehzahlen der Brennkraftmaschine 10 möglich.

Die Begrenzung des Drehmoments erfolgt vorzugsweise durch eine entsprechende Ansteuerung des Stellmotors 19 der Drosselklappe 17 durch das Steuer- und Regelgerät 34, durch welche die Luftfüllung im Brennraum 12 auf die im Block 56 festgelegte maximal mögliche Luftfüllung rlmaxth eingestellt wird, bei der das dem gewünschten Lambda-Wert entsprechende Luft-Kraftstoffgemisch im Brennraum 12 vorliegt. Das in Fig. 2 dargestellte Verfahren wird vorzugsweise nur dann aktiviert, wenn der Kraftstoffdruck pr, welcher vom Drucksensor 36 erfasst wird, unterhalb eines zulässigen Bereiches für den Druck in der Kraftstoff-Sammelleitung 20 liegt.

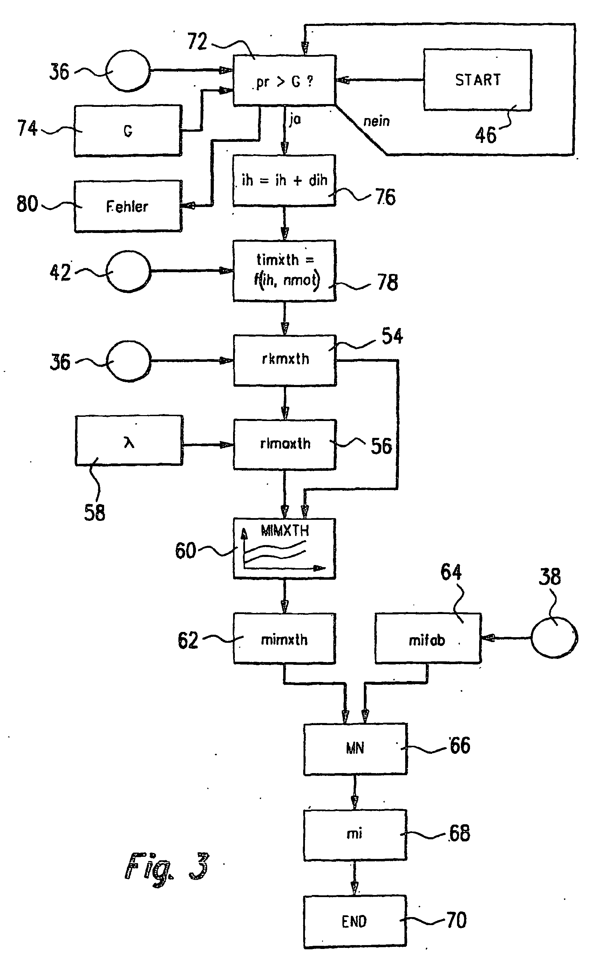

In Fig. 3 ist ein zweites Ausführungsbeispiel für ein Verfahren angegeben, mit dem auf einen fehlerhaften Druck pr in der Kraftstoff-Sammelleitung 20 reagiert werden kann. Funktionsblöcke, welche zu Fünktionsblöcken in Fig. 2 funktionsäquivalent sind, tragen in Fig. 3 die gleichen Bezugszeichen und sind nicht nochmals im Detail erläutert.

Das in Fig. 3 dargestellte Verfahren ist für jene Fälle gedacht, in denen der Druck pr in der Kraftstoff-Sammelleitung 20 z.B. aufgrund eines fehlerhaften Drucksteuerventils 28 oberhalb eines zulässigen Bereiches liegt. Um auch in diesem Fall ein sicheres Öffnen des Hochdruck-Einspritzventils 18 zu erlauben, muss der Haltestrom des Hochdruck-Einspritzventils 18 erhöht werden. Dies führt jedoch zu einer Erhöhung der Verlustleistung im Steuer- und Regelgerät 34. Dem wird durch eine Absenkung der maximal möglichen Einspritzzeit des Hochdruck-Einspritzventils 18 bzw. eine Absenkung des maximal zulässigen Drehmoments der Brennkraftmaschine 10 begegnet. Dies geschieht im Einzelnen wie folgt:
Im Block 72 wird der vom Drucksensor 36 erfasste Druck pr in der Kraftstoff-Sammelleitung 20 mit einem in einem Festwertspeicher 74 abgelegten Grenzwert G verglichen. Übersteigt der Druck pr den Grenzwert G, wird im Block 76 der Haltestrom ih um ein Inkrement dih vergrößert und eine Fehlermeldung 80 abgegeben. Auf diese Weise wird sichergestellt, dass auch bei dem erhöhten Kraftstoffdruck pr ein sicheres Öffnen des Einspritzventils 18 gewährleistet ist. Liegt der Druck pr im zulässigen Bereich, also unterhalb des Grenzwerts G, erfolgt ein Rücksprung zur Grenzwertprüfung im Block 72. Der Rücksprung kann ggf. in einer bestimmten Taktrate erfolgen.

Anschließend wird in einem Block 78 unter Hinzuziehung der Drehzahl nmot, welche vom Drehzahlgeber 42 bereitgestellt wird, eine maximal mögliche Einspritzzeit timxth des Hochdruck-Einspritzventils 18 bestimmt. Diese Einspritzzeit ist auf jeden Fall kürzer als die Einspritzzeit bei normalem Kraftstoffdruck.

Abhängig von dieser maximal möglichen Einspritzzeit timxth wird nun wieder in einem Block 54 die maximal einspritzbare Kraftstoffmenge rkmxth bestimmt. Der weitere Ablauf des in Fig. 3 dargestellten Verfahrens entspricht dem Verfahren von Fig. 2 und ist hier nicht weiter erläutert. Am Ende des Verfahrens ergibt sich jedenfalls ein Soll-Drehmoment mi, welches dem kleineren der beiden Momente mimxth und mifab entspricht, wobei es sich bei dem Drehmoment mimxth um ein aufgrund der maximal zulässigen Einspritzdauer timxth begrenztes Drehmoment handelt.

Auf diese Weise wird gewährleistet, dass auch bei einem zu hohen Druck pr in der Kraftstoff-Sammelleitung 20 ein ohne Drehzahlbegrenzung auskommender komfortabler Betrieb der Brennkraftmaschine 10 möglich ist, ohne dass Schäden an der Brennkraftmaschine 10 zu befürchten sind. Insbesondere Verbrennungsaussetzer mit damit einhergehenden Momenteneinbrüchen sind nicht zu befürchten, obwohl der gesamte Drehzahlbereich zur Verfügung steht. Der Fahrer eines mit der Brennkraftmaschine 10 ausgestatteten Kraftfahrzeugs wird überdies durch die Fehlermeldung im Block 80 auf das verringerte maximal zur Verfügung stehende Drehmoment hingewiesen und kann so seine Fahrweise der reduzierten bereit stehenden Antriebsleistung anpassen.

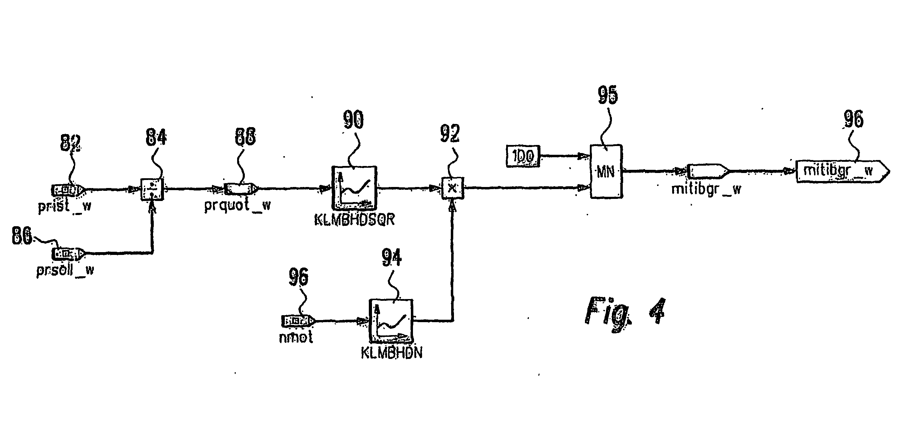

In Figur 4 ist noch eine weitere Möglichkeit dargestellt, das maximal mögliche Drehmoment an die aktuelle Situation in der Brennkraftmaschine anzupassen. Grundlage des in Figur 4 dargestellten Verfahrens ist die Überlegung, dass bei Verringerung des Kraftstoffdrucks die eingespritzte Kraftstoffmenge bei gleicher Einspritzdauer sinkt. Dabei wird angenommen, dass das Ventil so ausgelegt ist, dass bei Maximaldrehzahl und Volllast mit maximaler Anfettung die geforderte Menge gerade noch in den Brennraum der Brennkraftmaschine eingebracht werden kann. Dann muss das erlaubte Moment bei verringertem Kraftstoffdruck um genau den Anteil reduziert werden, um den sich die Einspritzmenge aufgrund des verringerten Drucks ändert. Die prozentuale Änderung ergibt sich aus der Wurzel von Istdruck zu Solldruck multipliziert mit 100%.

Bei geringerer Drehzahl kann bei verringertem Karftstoffdruck die Einspritzzeit verlängert werden, weshalb ein verringerter Kraftstoffdruck noch nicht unbedingt zu einer Momentenreduzierung führen muss. Über einen drehzahlabhängigen Faktor wird die Momentenreduktion wieder entsprechend zurückgenommen.

Im einzelnen arbeitet dieses Verfahren wie folgt: Ein tatsächlicher Kraftstoffdruck prist (Block 82) wird vom Drucksensor 36 bereitgestellt. In einem Block 84 wird dieser durch einen Kraftstoff-Solldruck prsoll (Block 86) dividiert, und das sich hieraus ergebende Verhältnis prquot (Block 88) in eine Kennlinie KLMBHDSQR (Block 90) eingespeist. Bei dieser handelt es sich um einen Wurzelbildner, aus dem sich die oben genannte prozentuale Verringerung der Einspritzmenge bzw. des maximalen Drehmoments ergibt.

Ausgangsseitig der Kennlinie im Block 90 erhält man einen Wert, der im Block 92 mit einem Faktor multipliziert wird, der wiederum von einer Kennlinie KLMBHDN (Block 94) ausgegeben wird, in die die aktuelle Drehzahl nmot eingespeist wird. Dieses somit drehzahlkorrigierte Ergebnis geht in eine Minimalauswahl (Block 95) und wird dort mit einem Maximalwert 100% verglichen. Das Ergebnis ist ein Drehmoment mitibgr (Block 96), welches analog zu den Figuren 2 bzw. 3 in die Minimalauswahl (dortige Blöcke 66) mit einem Fahrerwunschmoment eingeht.

Auf diese Weise kann zusätzlich direkt ein reduzierter Kraftstoffdruck sowie die Drehzahl bei der Bildung des maximal möglichen Drehmoments berücksichtigt werden.

## Patentansprüche

1. Verfahren zum Betreiben einer Brennkraftmaschine (10) insbesondere eines Kraftfahrzeugs, bei dem der Kraftstoff unter Druck über mindestens ein Einspritzventil (18) zugeführt und die eingespritzte Kraftstoffmenge durch die Einspritzzeit beeinflusst wird, wobei ein maximal zulässiges und vom aktuellen Kraftstoffdruck (pr) abhängiges Drehmoment (mimxth) der Brennkraftmaschine -(10) bestimmt wird.

2. Verfahren nach Anspruch 1, **dadurch gekennzeichnet, dass** das maximal zulässige Drehmoment (mimxth) aus einer maximalen Luftfüllung (rlmaxth) eines Brennraums (12) der Brennkraftmaschine gewonnen wird.

3. Verfahren nach Anspruch 2, **dadurch gekennzeichnet, dass** die maximale Luftfüllung (rlmaxth) auf der Basis der maximal einspritzbaren Kraftstoffmenge (rkmaxth) bestimmt wird.

4. Verfahren nach Anspruch 3, **dadurch gekennzeichnet, dass** die maximal einspritzbare Kraftstoffmenge (rkmaxth) aus der aktuellen Drehzahl (nmot), der maximal möglichen Einspritzzeit (timxth) und dem aktuellen Kraftstoffdruck (pr) bestimmt wird.

5. Verfahren nach Anspruch 3, **dadurch gekennzeichnet, dass** die maximal einspritzbare Kraftstoffmenge (rkmaxth) aus der aktuellen Drehzahl (nmot), einem Haltestrom (ih) des Einspritzventils (18) und dem aktuellen Kraftstoffdruck (pr) bestimmt wird.

6. Verfahren nach einem der vorhergehenden Ansprüche, dass eine Abweichung des aktuellen Kraftstoffdrucks (pr) von einem Sollbereich (G) erkannt wird und bei einer erkannten Abweichung eine Fehlermeldung (80) erfolgt.

7. Verfahren nach einem der vorhergehenden Ansprüche, **dadurch gekennzeichnet, dass** das bei verringertem Kraftstoffdruck (prist) maximal zulässige Drehmoment (mitibgr) gegenüber einem normalen Drehmoment um genau den Anteil reduziert ist, um den sich die Einspritzmenge durch den verringerten Druck ändert.

8. Verfahren nach einem der vorhergehenden Ansprüche, **dadurch gekennzeichnet, dass** das maximal zulässige Drehmoment (mitibgr) von.der aktuellen Drehzahl (nmot) abhängt.

9. Computerprogramm, **dadurch gekennzeichnet, dass** es zur Durchführung des Verfahrens nach einem der Ansprüche 1 bis 8 geeignet ist, wenn es auf einem Computer ausgeführt wird.

10. Computerprogramm nach Anspruch 9, **dadurch gekennzeichnet, dass** es auf einem Speicher, insbesondere auf einem Flash-Memory, abgespeichert ist.

11. Steuer- und/oder Regeleinrichtung zum Betreiben einer Brennkraftmaschine (10) insbesondere eines Kraftfahrzeugs, bei der der Kraftstoff unter Druck über mindestens ein Einspritzventil (18) zugeführt wird, welches die eingespritzte Kraftstoffmenge durch die Einspritzzeit beeinflusst, wobei die Steuer -und/oder Regel einrichtung Mittel aufweist ein maximal zulässiges von einem aktuellen Betriebsparameter abhängiges Drehmoment vorzugeben, **dadurch gekennzeichnet, dass** die Mittel das maximal zulässige Drehmoment (mimxth) der Brennkraftmaschine (10) bestimmen, in Abängigkeit von dem aktuellen Kraftstoffdruck (pr).

## Claims

1. Method for operating an internal combustion engine (10), in particular of a motor vehicle, in which the fuel is supplied under pressure via at least one injection valve (18) and the injected fuel quantity is influenced by the injection time, with a maximum permissible torque (mimxth), which is dependent on the current fuel pressure (pr) of the internal combustion engine (10) being determined.

2. Method according to Claim 1, **characterized in that** the maximum permissible torque (mimxth) is obtained from a maximum air filling (rlmaxth) of a combustion chamber (12) of the internal combustion engine.

3. Method according to Claim 2, **characterized in that** the maximum air filling (rlmaxth) is determined on the basis of the maximum injectable fuel quantity (rkmaxth).

4. Method according to Claim 3, **characterized in that** the maximum injectable fuel quantity (rkmaxth) is determined from the current engine speed (nmot), the maximum possible injection time (timxth) and the current fuel pressure (pr).

5. Method according to Claim 3, **characterized in that** the maximum injectable fuel quantity (rkmaxth) is determined from the current engine speed (nmot), a holding current (ih) for the injection valve (18) and the current fuel pressure (pr).

6. Method according to one of the preceding claims, **characterized in that** a deviation in the current fuel pressure (pr) from a desired range (G) is detected and a fault message (80) is generated if a deviation is detected.

7. Method according to one of the preceding claims, **characterized in that** the maximum permissible torque (mitibgr) at a reduced fuel pressure (prist) is reduced, compared to a normal torque, by precisely the proportion by which the injection quantity changes as a result of the reduced pressure.

8. Method according to one of the preceding claims, **characterized in that** the maximum permissible torque (mitibgr) depends on the current engine speed (nmot).

9. Computer program, **characterized in that** it is suitable for carrying out the method according to one of Claims 1 to 8, when it is run on a computer.

10. Computer program according to Claim 9, **characterized in that** it is stored on a memory, in particular on a flash memory.

11. Control and/or regulating device for operating an internal combustion engine (10), in particular of a motor vehicle, in which the fuel is supplied under pressure via at least one injection valve (18) which influences the injected fuel quantity by means of the injection time, the control and/or regulating device having means for predetermining a maximum permissible torque, which is dependent on a current operating parameter, **characterized in that** the means determine the maximum permissible torque (mimxth) of the internal combustion engine (10) as a function of the current fuel pressure (pr).

## Revendications

1. Procédé pour faire fonctionner un moteur à combustion interne (10), notamment d'un véhicule automobile,
**caractérisé en ce que**
le carburant est amené sous pression par au moins un injecteur (18) et la quantité de carburant injectée est influericée par le temps d'injection, un couple de rotation maximum admissible (mimxth) du moteur à combustion interne (10) étant déterminé en fonction de la pression de carburant effective (pr).

2. Procédé selon la revendication 1,
**caractérisé en ce que**
le couple de rotation maximum admissible (mimxth) est obtenu à partir d'un remplissage d'air maximum (rlmaxth) d'une chambre de combustion (12) du moteur à combustion interne.

3. Procédé selon la revendication 2,
**caractérisé en ce que**
le remplissage d'air maximum (rlmaxth) est déterminé sur la base de la quantité de carburant maximum injectable (rkmaxth).

4. Procédé selon la revendication 3,
**caractérisé en ce que**
la quantité de carburant maximum injectable (rkmaxth) est déterminée à partir de la vitesse de rotation effective (nmot), du temps d'injection maximum possible (timxth) et de la pression de carburant effective (pr).

5. Procédé selon la revendication 3,
**caractérisé en ce que**
la quantité de carburant maximum injectable (rkmaxth) est déterminée à partir de la vitesse de rotation effective (nmot), d'un courant de maintien (ih) de l'injecteur (18) et de la pression de carburant effective (pr).

6. Procédé selon l'une quelconque des revendications précédentes,
**caractérisé en ce qu'**
on reconnaît un écart de la pression de carburant effective (pr) par rapport à une plage de consigne (G), et en cas d'écart détecté, on émet un message de défaut (80).

7. Procédé selon l'une quelconque des revendications précédentes,
**caractérisé en ce qu'**
en présence d'une pression de carburant diminuée (prist) le couple de rotation maximum admissible (mitibgr) est réduit par rapport à un couple de rotation normal de précisément le montant auquel la quantité injectée est modifiée par la pression diminuée.

8. Procédé selon l'une quelconque des revendications précédentes,
**caractérisé en ce que**
le couple de rotation maximum admissible (mitibgr) est fonction de la vitesse de rotation effective (nmot).

9. Programme informatique,
**caractérisé en ce qu'**
il est approprié pour la mise en oeuvre du procédé selon l'une quelconque des revendications 1 à 8 lorsqu'il est exécuté sur un ordinateur.

10. Programme informatique selon la revendication 9,
**caractérisé en ce qu'**
il est stocké dans une mémoire, en particulier une mémoire flash.

11. Dispositif de commande et/ou de régulation pour faire fonctionner un moteur à combustion interne (10), notamment d'un véhicule automobile, dans lequel le carburant est amené sous pression par au moins un injecteur (18), qui influence la quantité de carburant injectée par le temps d'injection, le dispositif de commande et/ou de régulation présentant des moyens pour prédéfinir un couple de rotation maximum admissible en fonction d'un paramètre de fonctionnement effectif,
**caractérisé en ce que**
les moyens déterminent le couple de rotation maximum admissible (mimxth) du moteur à combustion interne (10) en fonction de la pression de carburant effective (pr).
